# EUROPÄISCHE PATENTSCHRIFT

(11) **EP 2 180 966 B1**
(45) Veröffentlichungstag und Bekanntmachung des Hinweises auf die Patenterteilung: **23.05.2012**
(21) Anmeldenummer: 08774340.7
(22) Anmeldetag: 26.06.2008
(51) Int. Cl.: B23D 61/12

(54) **STICHSÄGEBLATT**
JIGSAW BLADE
LAME DE SCIE SAUTEUSE

(30) Priorität: 20.08.2007 DE 102007039240
(43) Veröffentlichungstag der Anmeldung: 05.05.2010
(73) Patentinhaber: Robert Bosch GmbH, 70442 Stuttgart (DE)
(72) Erfinder: GROLIMUND, Daniel, CH-4528 Zuchwil (CH); KOCHER, Martin, CH-4500 Solothurn (CH)
(86) Internationale Anmeldenummer: PCT/EP2008/058158
(87) Internationale Veröffentlichungsnummer: WO 2009/024379

(56) Entgegenhaltungen:
- DE-U1- 20 109 811
- GB-A- 189 803 536
- US-B1- 6 363 614

## Beschreibung

Die Erfindung bezieht sich auf ein Stichsägeblatt nach dem Oberbegriff des Anspruches 1.

### Stand der Technik

Ein derartiges Stichsägeblatt ist aus der DE 201 09 811 U1 bekannt. Das Stichsägeblatt weist eine Hauptzahnreihe mit einer Mehrzahl gleichartiger Sägezähne auf, die ohne Schränkung ausgebildet sind, so dass das Sägeblatt glatte Flanken ohne Überstand der Sägezähne aufweist. Der Hauptzahnreihe sind mehrere Vorschneidezähne vorgelagert, die näher am Schaft des Stichsägeblattes angeordnet und mit einer Schränkung versehen sind. Die Vorschneidezähne sollen verhindern, dass die Schnittkante an der Oberseite des zu bearbeitenden Werkstückes aussplittert. Gemäß einer in der DE 201 09 811 U1 beschriebenen Variante verläuft die Zahnreihe mit den Vorschneidezähnen winklig zu der Hauptzahnreihe, wodurch eine weitere Verbesserung des Schnittbildes erzielt werden soll.

Grundsätzlich weisen jedoch geschränkte Zahnreihen den Nachteil eines verhältnismäßig breiten Schnittes auf, was gemäß der DE 201 09 811 U1 zu einer besseren Abfuhr von Sägespänen führen soll. Die geschränkten Vorschneidezähne bewirken jedoch, sofern diese im laufenden Sägebetrieb nach dem ersten Ansetzen des Sägeblattes in Kontakt mit dem Werkstück gelangen, dass Werkstücksplitter von den überstehenden Abschnitten der Zähne herausgerissen werden, wodurch die Qualität der Schnittfläche wieder beeinträchtigt wird.

Ein vergleichbares Sägeblatt ist auch aus der DE 42 31 498 A1 bekannt, bei dem ebenfalls eine Hauptsägezahnreihe vorgesehen ist, der eine winklig angeordnete, verhältnismäßig kurz ausgeführte Vorschneidereihe mit Vorschneidezähnen vorgelagert ist.

Aus GB 03536 A ist ein horizontal ausgerichtetes Sägegatter bekannt, wobei jedes Sägeblatt des Gatters zwei Sägezahnreihen mit vom Winkelbetrag her ausschließlich gleichwinklige Ausrichtungen bezogen auf die Schnittrichtung aufweist, um die vorwiegend runden Baustämme in der Nutzholzbearbeitung in beide Richtungen gleichmäßig sägend zu bearbeiten.

Aus US 6,363,614 B1 wiederum ist eine Art Taschenmesser mit schiebbaren Klingen bekannt, wobei ein Sägeblatt vorgesehen ist, welches zwei sich senkrecht zur Schnittlinie diametral gegenüberliegende Sägenzahnreihen aufweist. Bei einer Sägebearbeitung mit einer derartigen Klinge kommt in einer Schnittrichtung nur immer eine dieser Schnittrichtung zugeordnete Sägezahnreihe zum Einsatz.

Aus DE 201 09 811 U1 ist ferner ein Stichsägeblatt mit einer ersten Sägezahnreihe und einer zweiten Sägezahnreihe bekannt, die zueinander winklig angeordnet sind, und wobei die beiden Sägezahnreihen hintereinander liegend angeordnet sind und in einer gemeinsamen Ebene liegen. Dabei ist jedoch nur eine Sägezahnreihe gegenüber einer Längsachse des Stichsägeblattes winklig angeordnet.

### Offenbarung der Erfindung

Der Erfindung liegt die Aufgabe zugrunde, ein Stichsägeblatt mit hoher Schnittleistung und sauberem Schnittbild zu schaffen.

Diese Aufgabe wird erfindungsgemäß mit den Merkmalen des Anspruches 1 gelöst. Die Unteransprüche geben zweckmäßige Weiterbildungen an.

Das erfindungsgemäße Stichsägeblatt weist eine erste Sägezahnreihe und eine zweite Sägezahnreihe auf, die zueinander unter einem Winkel angeordnet sind. Gegenüber der Vorschub- bzw. Schnittrichtung des Sägeblattes nimmt jede der Sägezahnreihen einen Winkel ein, wobei jedoch der Winkel der einen Sägezahnreihe entgegengesetzt gerichtet ist zum Winkel der anderen Sägezahnreihe. Konstruktiv bedeutet dies, dass die Winkel der beiden Sägezahnreihen bezogen auf die Vorschub- bzw. Schnittrichtung mit einem positiven und einem negativen Vorzeichen versehen sind, also sich relativ zur Vorschub- bzw. Schnittrichtung in unterschiedliche Richtungen erstrecken. Somit nehmen die beiden Sägezahnreihen nicht nur zueinander einen Winkel ein, sondern auch jeweils gegenüber der vorschub- bzw. Schnittrichtung, die in der Regel identisch ist mit der Längsachse des Sägeblattes.

Auf diese Weise erhält man eine positive und eine negative Räumstellung der beiden Sägezahnreihen, was kombiniert werden kann mit unterschiedlich geformten Sägezähnen in jeder Sägezahnreihe. So hat es sich als vorteilhaft erwiesen, die dem Schaft benachbarte, erste Sägezahnreihe mit einem Freiwinkel zwischen dem Zahnrücken und der Schnittlinie durch die Zahnspitzen zu versehen, der größer ist als der entsprechende Freiwinkel der Sägezähne der zweiten Sägezahnreihe. Beispielsweise kann die erste, dem Schaft benachbarte Sägezahnreihe mit einer Dachverzahnung oder einer japanischen Verzahnung versehen sein, wohingegen die zweite, der Spitze des Sägeblattes benachbarte Zahnreihe mit einer Standard- bzw. Normalverzahnung ausgestattet werden kann. Die Kombination von negativer Räumstellung und Dachverzahnung in der ersten Sägezahnreihe bewirkt, dass die Werkstückoberseite nicht ausreißt. Der messerartige Zahnrücken der Dachverzahnung schneidet beim Abwärtshub vor und verhindert beim Aufwärtshub das Ausreißen der Oberfläche.

Die beiden Zahnreihen weisen vorteilhafterweise eine etwa annähernd gleiche Länge auf, zumindest aber beträgt die Länge der einen Zahnreihe mindestens die Hälfte der zweiten Zahnreihe. Beiden Zahnreihen kommt über die gesamte Dauer des Sägevorganges eine Schnittfunktion zu, so dass nicht mehr zwischen Vorschneideeinrichtung und Hauptsägezähnen unterschieden wird, sondern vielmehr beide Sägezahnreihen über die Dauer des Sägevorganges einen signifikanten Anteil an der Schnittleistung haben. Insgesamt wird hierdurch die Schnittleistung weiter verbessert.

Das erfindungsgemäße Stichsägeblatt ist vorteilhafterweise gekennzeichnet durch eine Ausführung ohne Schränkung der Sägezähne, und zwar weder in der ersten noch in der zweiten Sägezahnreihe. Damit wird das Problem vermieden, welches üblicherweise bei der Verwendung geschränkter Sägezähne auftritt, nämlich ein verschlechtertes Schnittbild aufgrund des Ausreißens von Werkstücksplittern. Das erfindungsgemäße Sägeblatt weist dagegen glatt geschliffene Flanken auf, was den zusätzlichen Vorteil eines schmalen Schnittes bringt.

Grundsätzlich reichen bereits verhältnismäßig kleine Winkel der ersten und zweiten Sägezahnreihe gegenüber der Vorschub- bzw. Schnittrichtung des Sägeblattes aus, um die genannten Vorteile eines sauberen Schnittbildes und einer hohen Schnittleistung zu erreichen. Die Winkel können unterschiedlich groß sein, sie sind ggf. aber auch gleich groß. Es hat sich als zweckmäßig erwiesen, den Winkel der ersten, dem Schaft des Stichsägeblatts benachbarten Sägezahnreihe bis zu 2°, insbesondere zwischen 1° und 2° auszuführen, wohingegen der Winkel der zweiten, der Spitze benachbarten Sägezahnreihe demgegenüber etwas kleiner ist, insbesondere nicht größer als 1.5° und vorzugsweise zwischen 0.5° und 1.5° beträgt. Diese verhältnismäßig kleinen Winkel sind ausreichend, um ein Ausreißen der Schnittoberfläche zu verhindern und ein sauberes Schnittbild zu erreichen.

Die Sägezähne beider Sägezahnreihen können sich zwar im Hinblick auf ihre Geometrie unterscheiden. Vorteilhafterweise weisen aber alle Sägezähne in die gleiche Richtung, also entweder zur Spitze oder, in bevorzugter Ausführung zum Schaft. Dennoch kann es auch vorteilhaft sein, dass die Sägezähne der beiden Sägezahnreihen in unterschiedliche Richtungen weisen, also die Sägezähne der dem Schaft benachbarten Reihe in Richtung der Spitze und die Sägezähne der der Spitze benachbarten Reihe zum Schaft oder umgekehrt.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht auf ein Stichsägeblatt mit einer ersten, dem Schaft zugewandten Sägezahnreihe und einer zweiten, der Spitze zugewandten Sägezahnreihe, wobei die beiden Sägezahnreihen gegenüber der Vorschub- bzw. Schnittrichtung jeweils einen Winkel einnehmen,
- Fig. 2: das Sägeblatt in einer Ansicht von unten,
- Fig. 3: einen Schnitt gemäß Schnittlinie A-A aus Fig. 1,
- Fig. 4: eine weitere Darstellung des Sägeblattes mit eingezeichneten Freiwinkeln aus dem Bereich der ersten und der zweiten Sägezahnreihe,
- Fig. 5: eine perspektivische Darstellung der Sägezähne der ersten Sägezahnreihe,
- Fig. 6: eine perspektivische Darstellung der Sägezähne der zweiten Sägezahnreihe.

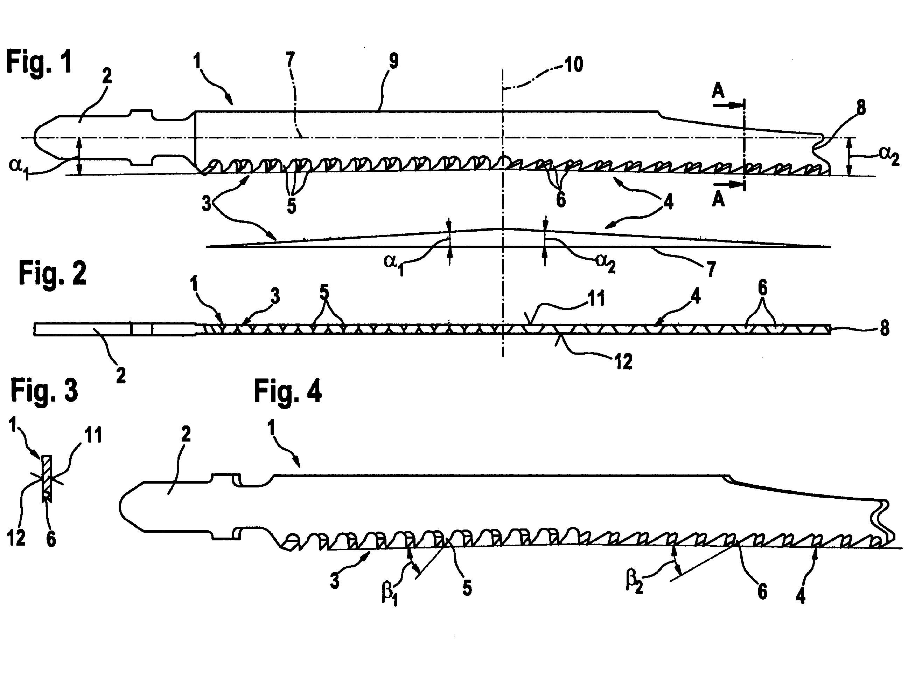

Das in Fig. 1 dargestellte Stichsägeblatt 1 weist einen Schaft 2 auf, über den das Stichsägeblatt in einer maschinell betriebenen Säge eingespannt wird. Am Stichsägeblatt verteilen sich die Sägezähne 5, 6 auf eine erste Sägezahnreihe 3, die benachbart zum Schaft 2 angeordnet ist, und eine zweite Sägezahnreihe 4 benachbart zur Spitze 8 des Sägeblattes, wobei die beiden Sägezahnreihen 3, 4 hintereinander liegend angeordnet sind und in einer gemeinsamen Ebene liegen. Die Sägezähne 5 und 6 aus den beiden Sägezahnreihen 3 bzw. 4 sind jeweils zum Schaft 2 hin gerichtet. Die beiden Sägezahnreihen 3 und 4 weisen eine etwa gleich große Länge auf, der Übergang zwischen den Sägezahnreihen 3 und 4 ist mit der Geraden 10 gekennzeichnet. Die Längsachse des Stichsägeblattes 1 ist mit dem Bezugszeichen 7 versehen; die Längsachse 7 ist zugleich die Vorschub- bzw. Schnittrichtung des Sägeblattes 1. Der Rücken 9 des Sägeblattes verläuft parallel zur Längsachse 7.

Die beiden Sägezahnreihen 3 und 4 weisen gegenüber der Längsachse bzw. Vorschubrichtung 7 einen Winkel α₁ bzw. α₂ auf. Jede Sägezahnreihe 3 bzw. 4 nimmt einen unterschiedlichen Winkel α₁ bzw. α₂ gegenüber der Vorschubrichtung 7 ein, wobei im Ausführungsbeispiel zweckmäßigerweise der Winkel α₁ der ersten, dem Schaft 2 benachbarten Sägezahnreihe 3 größer ist als der Winkel α₂ der zweiten, der Spitze 8 zugewandten Sägezahnreihe 4. Typische Werte sind für den Winkel α₁ der ersten Sägezahnreihe 3 Bereiche zwischen 1° und 2° und für den Winkel α₂ der zweiten Sägezahnreihe 4 ein Bereich zwischen 0.5° und 1.5°. Die Winkel α₁ und α₂ werden zwischen der Zahnspitzenlinie, die durch die Zahnspitzen der jeweiligen Sägezähne 5 bzw. 6 verläuft, und der Vorschubrichtung 7 gemessen. Im Übergang 10 zwischen erster und zweiter Sägezahnreihe 3 bzw. 4 ist der Abstand zum Rücken 9 am kleinsten, wodurch Dreieckform erreicht wird mit zum Schaft 2 bzw. zur Spitze 8 hin abfallenden Sägezahnreihen.

Um die Winkel α₁ und α₂ der Sägezahnreihen zu verdeutlichen, ist in Fig. 1 unmittelbar unterhalb des Stichsägeblattes 1 ein Dreieck eingezeichnet, dessen Hypotenuse die Vorschubrichtung 7 und dessen Katheten die Sägezahnreihen 3 und 4 darstellen. Die Winkel α₁ zwischen der ersten Sägezahnreihe 3 und der Vorschubrichtung 7 einerseits und α₂ zwischen der zweiten Sägezahnreihe 4 und der Vorschubrichtung 7 andererseits sind in dem Dreieck aus Gründen der übersichtlicheren Darstellung überzeichnet eingetragen. Wesentlich ist jedoch, dass zum einen jede Sägezahnreihe 3 bzw. 4 einen Winkel mit der Vorschubrichtung 7 einschließt und zum anderen die Winkel α₁ und α₂ unterschiedlich groß sind, wobei der Winkel α₁ vorteilhafterweise größer ist als der Winkel α₂.

Wie der Ansicht des Sägeblattes 1 von unten gemäß Fig. 2 und der Schnittdarstellung gemäß Fig. 3 zu entnehmen, sind die Sägezähne 5 und 6 in den Sägezahnreihen 3 und 4 ohne Schränkung ausgebildet. Die Flanken 11 und 12 des Sägeblattes sind geschliffen ausgeführt und liegen jeweils in einer Ebene, die durch kein Bauteil des Sägeblattes durchbrochen wird.

Aus Fig. 4 geht der Freiwinkel β₁ bzw. β₂ der Sägezähne 5 bzw. 6 aus den Sägezahnreihen 3 bzw. 4 hervor. Die Sägezähne beider Sägezahnreihen 3 und 4 sind zum Schaft 2 hin gerichtet. Der Freiwinkel β₁ der Sägezähne 5 aus der ersten Sägezahnreihe 3 ist vorteilhafterweise größer als der Freiwinkel β₂ der Sägezähne 6 aus der zweiten Sägezahnreihe 4. Es ist insbesondere vorgesehen, dass der Freiwinkel β₁ um etwa 50 % größer ist als der Freiwinkel β₂; in Zahlen ausgedrückt beträgt der Freiwinkel β₁ beispielsweise 45°, der Freiwinkel β₂ beispielhaft 30°.

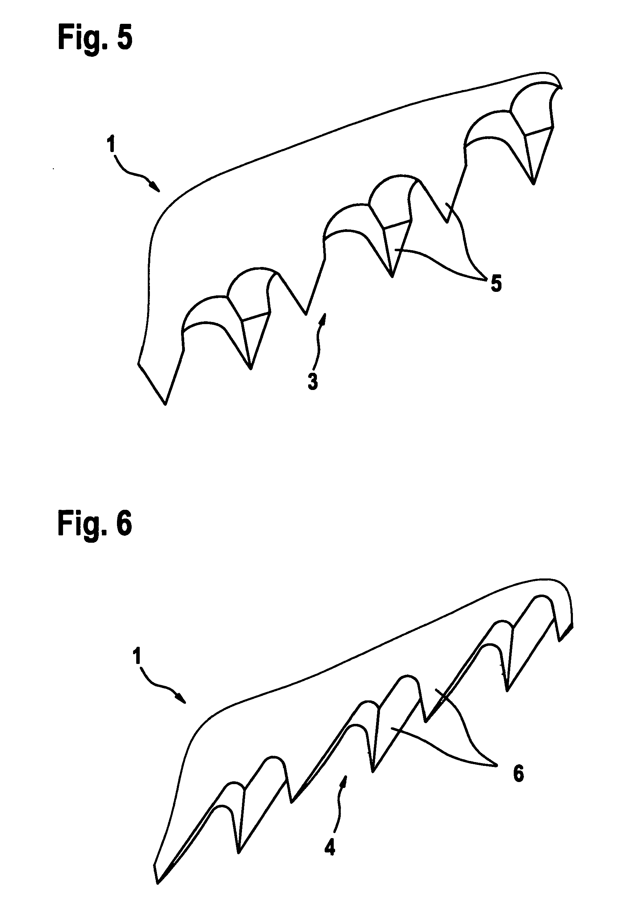

In Fig. 5 und Fig. 6 sind verschiedene Sägezahntypen für die erste Sägezahnreihe 3 (Fig. 5) bzw. die zweite Sägezahnreihe 4 (Fig. 6) dargestellt. In Fig. 5 ist beispielhaft eine so genannte Dachverzahnung dargestellt, in Fig. 6 dagegen eine Standard- bzw. Normalverzahnung.

## Patentansprüche

1. Stichsägeblatt, mit einer Längsachse, einer ersten Sägezahnreihe (3) und einer zweiten Sägezahnreihe (4), die zueinander winklig angeordnet sind, wobei die beiden Sägezahnreihen 3, 4 hintereinander liegend angeordnet sind und in einer gemeinsamen Ebene liegen, **dadurch gekennzeichnet, dass** sowohl die erste Sägezahnreihe (3) als auch die zweite Sägezahnreihe (4) gegenüber der Längsachse des Sägeblattes (1) einen Winkel (α₁, α₂) einnimmt, wobei der Winkel (α₁) der ersten Sägezahnreihe (3) entgegengesetzt gerichtet ist zum Winkel (α₂) der zweiten Sägezahnreihe (4) und die Winkel (α₁, α₂) unterschiedlich groß sind.

2. Stichsägeblatt nach Anspruch 1,
**dadurch gekennzeichnet, dass** im Übergang (10) zwischen erster und zweiter Zahnreihe (3, 4) der Abstand zum Sägeblattrücken (9) am kleinsten ist.

3. Stichsägeblatt nach Anspruch 1,
**dadurch gekennzeichnet, dass** der Winkel (α₁) der ersten, dem Schaft (2) des Stichsägeblatts (1) benachbarten Sägezahnreihe (3) größer ist als der Winkel (α₂) der zweiten, der Spitze (8) des Stichsägeblatts (1) benachbarten Sägezahnreihe (4).

4. Stichsägeblatt nach einem der Ansprüche 1 bis 3,
**dadurch gekennzeichnet, dass** der Winkel (α₁) der ersten, dem Schaft (2) des Stichsägeblatts (1) benachbarten Sägezahnreihe (3) nicht größer ist als 2° und insbesondere zwischen 1° und 2° beträgt.

5. Stichsägeblatt nach einem der Ansprüche 1 bis 4,
**dadurch gekennzeichnet, dass** der Winkel (α₂) der zweiten, der Spitze (8) des Stichsägeblatts (1) benachbarten Sägezahnreihe (4) nicht größer ist als 1.5° und insbesondere zwischen 0.5° und 1.5° beträgt.

6. Stichsägeblatt nach einem der Ansprüche 1 bis 5,
**dadurch gekennzeichnet, dass** die Sägezahnreihen (3, 4) unterschiedliche Sägezähne (5, 6) aufweisen.

7. Stichsägeblatt nach einem der Ansprüche 1 bis 6,
**dadurch gekennzeichnet, dass** die Sägezähne (5, 6) der beiden Sägezahnreihen (3, 4) unterschiedliche Freiwinkel (β₁, β₂) aufweisen.

8. Stichsägeblatt nach Anspruch 7,
**dadurch gekennzeichnet, dass** die Freiwinkel (β₁, β₂) sich um annähernd 50% unterscheiden.

9. Stichsägeblatt nach Anspruch 7 oder 8,
**dadurch gekennzeichnet, dass** der Freiwinkel (β₁) der Sägezähne (5) der dem Schaft (2) benachbarten Sägezahnreihe (3) größer ist als der Freiwinkel (β₂) der Sägezähne (6) der anderen Sägezahnreihe (4).

10. Stichsägeblatt nach einem der Ansprüche 1 bis 9,
**gekennzeichnet durch** eine Ausführung ohne Schränkung der Sägezähne (5, 6).

11. Stichsägeblatt nach einem der Ansprüche 1 bis 10,
**dadurch gekennzeichnet, dass** die Länge der einen Zahnreihe (3) mindestens die Hälfte der Länge der anderen Zahnreihe (4) beträgt.

12. Stichsägeblatt nach Anspruch 11,
**dadurch gekennzeichnet, dass** die beiden Sägezahnreihen (3, 4) zumindest annähernd gleich lang sind.

## Claims

1. Jigsaw blade having a longitudinal axis, a first saw-tooth row (3) and a second saw-tooth row (4), which are arranged at an angle to one another, wherein the two saw-tooth rows (3, 4) are disposed one behind the other and are located in a common plane, **characterized in that** both the first saw-tooth row (3) and the second saw-tooth row (4) assume an angle (α₁, α₂) with respect to the longitudinal axis of the saw blade (1), wherein the angle (α₁) of the first saw-tooth row (3) is directed in the opposite direction to the angle (α₂) of the second saw-tooth row (4) and the angles (α₁, α₂) have different magnitudes.

2. Jigsaw blade according to Claim 1, **characterized in that** the distance from the saw blade back (9) is smallest in the transition (10) between the first and the second tooth row (3, 4).

3. Jigsaw blade according to Claim 1, **characterized in that** the angle (α₁) of the first saw-tooth row (3) adjacent to the shank (2) of the jigsaw blade (1) is greater than the angle (α₂) of the second saw-tooth row (4) adjacent to the tip (8) of the jigsaw blade (1).

4. Jigsaw blade according to one of Claims 1 to 3, **characterized in that** the angle (α₁) of the first saw-tooth row (3) adjacent to the shank (2) of the jigsaw blade (1) is not greater than 2° and in particular is between 1° and 2°.

5. Jigsaw blade according to one of Claims 1 to 4, **characterized in that** the angle (α₂) of the second saw-tooth row (4) adjacent to the tip (8) of the jigsaw blade (1) is not greater than 1.5° and in particular is between 0.5° and 1.5°.

6. Jigsaw blade according to one of Claims 1 to 5, **characterized in that** the saw-tooth rows (3, 4) have different saw teeth (5, 6).

7. Jigsaw blade according to one of Claims 1 to 6, **characterized in that** the saw teeth (5, 6) of the two saw-tooth rows (3, 4) have different clearance angles (β₁, β₂).

8. Jigsaw blade according to Claim 7, **characterized in that** the clearance angles (β₁, β₂) differ by approximately 50%.

9. Jigsaw blade according to Claim 7 or 8, **characterized in that** the clearance angle (β₁) of the saw teeth (5) of the saw-tooth row (3) adjacent to the shank (2) is greater than the clearance angle (β₂) of the saw teeth (6) of the other saw-tooth row (4).

10. Jigsaw blade according to one of Claims 1 to 9, **characterized by** a configuration without off-setting of the saw teeth (5, 6).

11. Jigsaw blade according to one of Claims 1 to 10, **characterized in that** the length of one tooth row (3) is at least half the length of the other tooth row (4).

12. Jigsaw blade according to Claim 11, **characterized in that** the two saw-tooth rows (3, 4) are at least approximately the same length.

## Revendications

1. Lame de scie sauteuse, comprenant un axe longitudinal, une première rangée de dents de scie (3) et une deuxième rangée de dents de scie (4), qui sont disposées de manière inclinée les unes par rapport aux autres, les deux rangées de dents de scie (3, 4) étant disposées l'une derrière l'autre et se situant dans un plan commun, **caractérisée en ce que** la première rangée de dents de scie (3) ainsi que la deuxième rangée de dents de scie (4) sont orientées suivant un angle (α₁, α₂) par rapport à l'axe longitudinal de la lame de scie (1), l'angle (α₁) de la première rangée de dents de scie (3) étant orienté à l'opposé de l'angle (α₂) de la deuxième rangée de dents de scie (4) et les angles (α₁, α₂) étant différents.

2. Lame de scie sauteuse selon la revendication 1, **caractérisée en ce qu'**au niveau de la transition (10) entre la première et la deuxième rangée de dents (3, 4), la distance au dos de la lame de scie (9) est la plus petite.

3. Lame de scie sauteuse selon la revendication 1, **caractérisée en ce que** l'angle (α₁) de la première rangée de dents de scie (3) adjacente au manche (2) de la lame de scie sauteuse (1) est supérieur à l'angle (α₂) de la deuxième rangée de dents de scie (4) adjacente à la pointe (8) de la lame de scie sauteuse (1).

4. Lame de scie sauteuse selon l'une quelconque des revendications 1 à 3, **caractérisée en ce que** l'angle (α₁) de la première rangée de dents de scie (3) adjacente au manche (2) de la lame de scie sauteuse (1) n'est pas supérieur à 2° et vaut notamment entre 1° et 2°.

5. Lame de scie sauteuse selon l'une quelconque des revendications 1 à 4, **caractérisée en ce que** l'angle (α₂) de la deuxième rangée de dents de scie (4) adjacente à la pointe (8) de la lame de scie sauteuse (1) n'est pas supérieur à 1,5° et vaut notamment entre 0,5° et 1,5°.

6. Lame de scie sauteuse selon l'une quelconque des revendications 1 à 5, **caractérisée en ce que** les rangées de dents de scie (3, 4) présentent des dents de scie différentes (5, 6).

7. Lame de scie sauteuse selon l'une quelconque des revendications 1 à 6, **caractérisée en ce que** les dents de scie (5, 6) des deux rangées de dents de scie (3, 4) présentent des angles de coupe différents (β₁, β₂).

8. Lame de scie sauteuse selon la revendication 7, **caractérisée en ce que** les angles de coupe (β₁, β₂) se différencient d'environ 50%.

9. Lame de scie sauteuse selon la revendication 7 ou 8, **caractérisée en ce que** l'angle de coupe (β₁) des dents de scie (5) de la rangée de dents de scie (3) adjacente au manche (2) est supérieur à l'angle de coupe (β₂) des dents de scie (6) de l'autre rangée de dents de scie (4).

10. Lame de scie sauteuse selon l'une quelconque des revendications 1 à 9, **caractérisée par** une réalisation sans décalage des dents de scie (5, 6).

11. Lame de scie sauteuse selon l'une quelconque des revendications 1 à 10, **caractérisée en ce que** la longueur d'une rangée de dents (3) mesure au moins la moitié de la longueur de l'autre rangée de dents (4).

12. Lame de scie sauteuse selon la revendication 11, **caractérisée en ce que** les deux rangées de dents de scie (3, 4) ont au moins approximativement la même longueur.
